# EUROPEAN PATENT APPLICATION

(11) **EP 4 481 078 A1**
(43) Date of publication of application: **25.12.2024**
(21) Application number: 23180764.5
(22) Date of filing: 21.06.2023
(51) Int. Cl.: C22C 21/08, C22F 1/047, H01M 50/224, H01M 50/233, H01M 50/24, H01M 50/249, H01M 50/276, B60K 1/04

(54) **BATTERY BOX PART FOR ELECTRIC VEHICLES**

(71) Applicant: Constellium Rolled Products Ravenswood, LLC, Ravenswood, West Virginia 26164 (US)
(72) Inventor: LANGILLE, Michael, 38600 FONTAINE (FR); LORENZINO, Pablo, 38500 SAINT CASSIEN (FR); FRANKLIN, Jack, TULSA, 74134 (US)
(74) Representative: Constellium - Propriété Industrielle

(57) **Abstract**

The invention relates to a part of battery box for electric or hybrid heavy motor vehicles made from an aluminium alloy plate having a thickness from 6 to 15 mm, wherein said aluminum alloy comprises 4.0 to 5.3 wt.% of Mg, 0.4 to 1.2 wt.% of Mn, 0.5 wt.% or less of Si, 0.5 wt.% or less of Fe, 0.3 wt.% or less of Cu, 0.3 wt.% or less of Cr, 0.5 wt.% or less of Zn, 0.2 wt.% or less of Ti, rest aluminium and unavoidable impurities up to 0.05 wt.% each and 0.15 wt.% total, wherein the plate is in a strain-hardened and partially annealed temper H2X or a stabilized temper H3X. The part of battery box according to the invention exhibit a good balance between, intrusion and corrosion properties.

## Description

### FIELD OF THE INVENTION

The present invention concerns the field of electric or hybrid heavy motor vehicles.

The present invention concerns more particularly battery boxes of such an electric or hybrid heavy motor vehicle, consisting of a peripheral frame which has a generally convex polygonal shape in planar view, a bottom part which is joined to the lower surface of the peripheral frame made of aluminum alloy and a top cover for closing.

### STATE OF THE ART

A battery box may comprise a chamber receiving electrical energy storage cell element units, enabling production of electrical energy for driving the electric or hybrid vehicle. The units of electrical energy storage cell elements are placed in the battery box, after which the battery box is mounted in an electric or hybrid motor vehicle.

An electric motor vehicle or hybrid vehicle (electric motor vehicle which is also provided with an internal combustion engine) requires a large number of batteries for driving a motor. Some examples of battery box of conventional batteries for electrical vehicles can be in references EP 1939026, US 2007/0141451, US 2008/0173488, US 2009/0236162, EP 2623353.

Such a battery box is required to have a good stiffness to prevent the container from being easily deformed even when the vehicle has an accident, and a protective function which, even when deformation reaches the container, minimizes breakage of the batteries. Therefore, a battery box is requested to have sufficient mechanical properties to protect the modules during crash impacts. CN106207044 discloses a carbon fiber composite material battery box made of carbon fiber interlayers, PVC foam laminated, allowing to increase the stiffness and the performance of side impact. CN205930892 discloses a utility model which uses honeycomb baffle structure in place of the bottom part to improve crash safety performance. EP2766247 proposes the use of shells and a free deformation space between the lateral wall of the battery sub-compartment and the vehicle body longitudinal beam.

A battery box is also required to be perfectly sealed, to avoid the ingress of any fluid into the battery box chamber or the leakage of any electrolyte contained into the electrical energy storage cell elements out of the battery box chamber. Tight sealing is particularly mandatory when the battery box is fixed under the floor of the vehicle to prevent water or mud ingress. In addition, corrosion resistance against inward or outward fluids is needed.

In order to improve the running performance of a vehicle, a battery box has to have a minimized weight while at the same time offering maximum resistance to crash, tight sealing, corrosion resistance, ability to accommodate temperature control and ability to contain the maximum number of electrical energy storage cell elements.

Patent application CN108342627 discloses an electric vehicle battery box prepared from the following raw materials in parts by mass: 0.4-0.9 parts of iron, 0.5-0.8 parts of titanium, 0.7-1.3 parts of zinc, 0.2-0.6 parts of silicon, 3-6 parts of nickel, 4-8 parts of copper, 1-3 parts of manganese, 80-90 parts of aluminum, 0.2-0.6 parts of boron carbide, 0.8-1 part of chromium oxide, 0.2-0.25 parts of magnesium oxide, 0.2-0.5 parts of silicon oxide, 0.2-0.5 parts of titanium oxide, 0.2-0.5 parts of yttrium oxide, 0.02-0.05 parts of beryllium carbide, 0.02-0.05 parts of zirconium carbide and 0.02-0.05 parts of tungsten carbide.

Patent application CN107201464 discloses an electric automobile battery box prepared from, by weight, 0.4-0.9 part of iron, 0.5-0.8 part of titanium, 0.7-1.3 part of zinc, 0.2-0.6 part of silicon, 0.1-0.15 part of titanium, 3-6 parts of nickel, 4-8 parts of copper, 1-3 parts of manganese and 80-90 parts of aluminum.

Patent application CN107760162 discloses a high-strength corrosion-resistant passenger car battery box which comprises a box body, wherein the box body is made of a high-strength alloy material; the surface of the box body is coated by a layer of a corrosion-resistant coating; the aluminum alloy material is prepared from the following components in percentage by mass: 0.21-0.47% of Mn, 1.83-3.75% of Cu, 0.23-0.47% of Ti, 2.35-7.48% of SiC, 0.13-0.54% of Er and the balance of pure aluminum and trace impurities.

For top and bottom part of battery box for cars sheet products are usually considered with a thickness typically up to 4 mm, in some cases up to 6 mm.

Patent application WO2020/187942 discloses a bottom part of a battery box for electric or hybrid motor vehicles made from an aluminium alloy sheet having a thickness between 2 and 6 mm, wherein said aluminum alloy comprises 2.5 to 4.0 wt.% of Mg, 0.1 to 0.8 wt.% of Mn, 0.4 wt.% or less of Si, 0.5 wt.% or less of Fe, 0.5 wt.% or less of Cu, 0.1 wt.% or less of Cr, 0.1 wt.% or less of Zn, 0.1 wt.% or less of Ti, rest aluminium and unavoidable impurities up to 0.05 wt.% each and 0.15 wt.% total.

Patent application DE102017102685 discloses a deep-drawn sheet metal component for a battery box with a thickness from 1 to 6 mm made from an aluminum alloy.

The requirements for the battery box of heavy motor vehicles in terms of corrosion resistance and mechanical properties are increased compared to regular cars due to the high kinetic energy of such vehicles at full speed. By heavy motor vehicle it is meant within the scope of the invention a motor vehicle with a weight of at least 1.8 t, preferably of at least 2 t. Heavy motor vehicles includes very heavy motor vehicles having a weight of a least 3.5 t and super heavy motor vehicles having a weight of at least 20 t. Heavy motor vehicles typically include mid-size or large size pick-up trucks, trucks or lorries such as 18 wheelers semi-trailers, mid-size or large size SUV, delivery vans, school buses, construction equipment vehicles.

To meet the requirements for the battery box of heavy motor vehicles in terms of corrosion resistance and mechanical properties, the present solution has been to use a heat treatable alloy such as an alloy from the 6XXX series.

The present invention has been developed to improve the battery box parts for electric or hybrid heavy motor vehicles. The present invention relates to a plate product for a battery box part for electric or hybrid motor heavy motor vehicle, which is simultaneously light, resistant against intrusion, sufficiently formable and sealable to provide a leak tight box, corrosion resistant, able to accommodate temperature variations, sufficiently stiff and strong, many of these properties being antagonistic.

### OBJECT OF THE INVENTION

An object of the invention is a part of battery box for electric or hybrid heavy motor vehicle made from an aluminium alloy plate having a thickness from 6 to 15 mm, wherein said aluminum alloy comprises 4.0 to 5.3 wt.% of Mg, 0.4 to 1.2 wt.% of Mn, 0.5 wt.% or less of Si, 0.5 wt.% or less of Fe, 0.3 wt.% or less of Cu, 0.3 wt.% or less of Cr, 0.5 wt.% or less of Zn, 0.2 wt.% or less of Ti, rest aluminium and unavoidable impurities up to 0.05 wt.% each and 0.15 wt.% total, wherein the plate is in a strain-hardened and partially annealed temper H2X or a stabilized temper H3X.

Another object of the invention is a method to make a part of battery box according to the invention comprising successively
- preparing an aluminium alloy comprising 4.0 to 5.3 wt.% of Mg, 0.4 to 1.2 wt.% of Mn, 0.5 wt.% or less of Si, 0.5 wt.% or less of Fe, 0.3 wt.% or less of Cu, 0.3 wt.% or less of Cr, 0.5 wt.% or less of Zn, 0.2 wt.% or less of Ti, rest aluminium and unavoidable impurities up to 0.05 wt.% each and 0.15 wt.% total;
- casting said aluminium alloy into a rolling ingot;
- homogenizing and/or reheating said rolling ingot;
- hot rolling said rolling ingot to obtain a plate with a thickness from 6 mm to 15 mm;
- partially annealing or stabilizing the plate.

Another object of the invention is an electric or hybrid heavy motor vehicle comprising a part of battery box according to the invention.

### DESCRIPTION OF THE FIGURES

Figure 1 is an exploded view of a battery box for an electric or hybrid motor vehicle.
Figure 2 shows the experimental set up of the intrusion test.
Figure 3 shows an example of Force vs Displacement curve at the center position for test samples 1, 2, 3 and 9.
Figure 4 shows an example of Force vs Displacement curve at the corner position for test samples 1, 2, 3 and 9.
Figure 5 shows the positioning the examples in graph of Center Position Maximum Force vs. Corner Position Maximum Force.
Figure 6 shows the positioning of the examples in graph of NAMLT after 1000 h at 100 °C vs Energy at Fmax in Center position.

### DETAILED DESCRIPTION OF THE INVENTION

All aluminium alloys referred to in the following are designated using the rules and designations defined by the Aluminium Association in Registration Record Series that it publishes regularly, unless mentioned otherwise.

Metallurgical tempers referred to are designated using the European standard EN-515 (1993).

All the alloy compositions are provided in weight % (wt.%).

Unless mentioned otherwise, static mechanical characteristics, i.e., ultimate tensile strength Rₘ, tensile yield stress R_{p0,2}, and total elongation, also named elongation at break, TE, are determined by a tensile test according to standard NF EN ISO 6892-1 (2016), the location at which the pieces are taken and their direction being defined in standard EN 485 (2016).

Unless otherwise specified, the definitions of standard EN 12258 (2012) apply. In particular, a plate is a rolled product with a rectangular cross-section and a thickness not less than 6 mm (in the USA not less than 0,250 inch) with sheared or sawn edges.

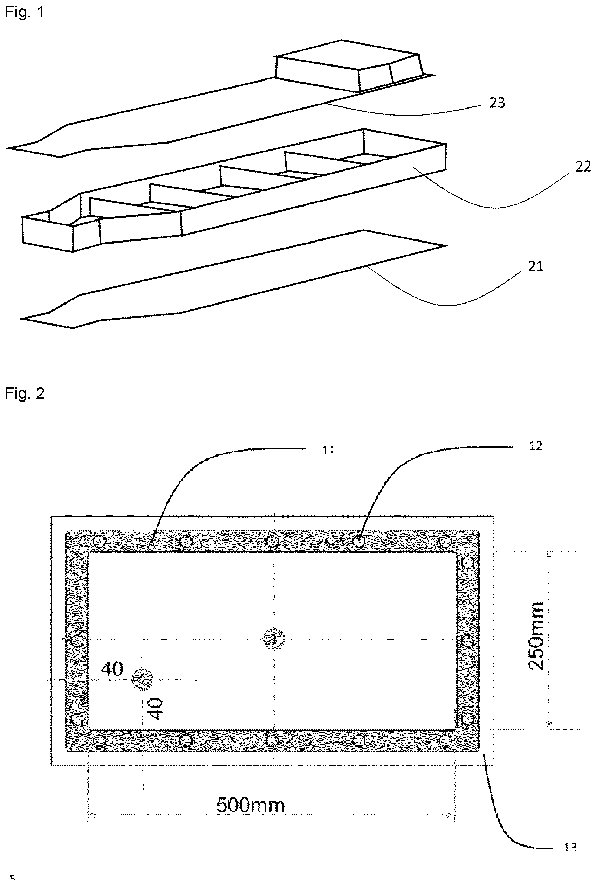

As illustrated by Figure 1, a battery box for electric or hybrid motor vehicles includes several parts: a bottom plate 21, an outer peripheral frame 22 formed to be positioned on an outer peripheral edge portion of the bottom part and a top plate or cover 23 placed on the peripheral frame from above. The outer peripheral frame is commonly joined to the bottom plate by assembling means such as welding or bonding to ensure the resistance of the assembly and the sealing of the edges between the bottom plate and the peripheral frame. The outer peripheral frame has a generally convex polygonal shape in planar view. The top plate is assembled to the peripheral frame by assembling means, such as rivets or screws and may also be sealed.

A specific intrusion test was designed to evaluate the resistance of the bottom plate to intrusion. To evaluate the resistance of the plate material against intrusion, two critical configurations on the bottom plate are possible, which are intrusion close to and far from the outer peripheral frame. Close to the frame, the mechanical system is stiff allowing only little deformation of the plate during intrusion. Thus, fracture of the material is the dominant damage mechanism. In the center position, far from the frame, the system behaves elastically, and soft and plastic deformation is possible leading to a high risk of contact of the plate with the battery modules. The test is carried out on a static loading machine Zwick 400. As illustrated by Figure 2, the plate 13 is clamped between an upper and a lower steel frame 11 having a width of 30 mm and fixed with several screws 12. A cylindrical punch with a diameter of 19.6 mm and rounded edges (r = 1.5 mm) is fixed on the machine to perform an intrusion into the plate. The force applied on the punch and its displacement are measured. The frame can be moved such as to test two positions on the same plate center reference 1 and corner reference 4 positions, see Figure 2. The total punch displacement during the test is set to a distance of 15 mm chosen to represent a typical space between the bottom plate and the batteries. The test is performed under quasi-static conditions. The maximal resistance of the plate material is evaluated for the intrusion of an object into the bottom plate considering a load of 1.5 t.

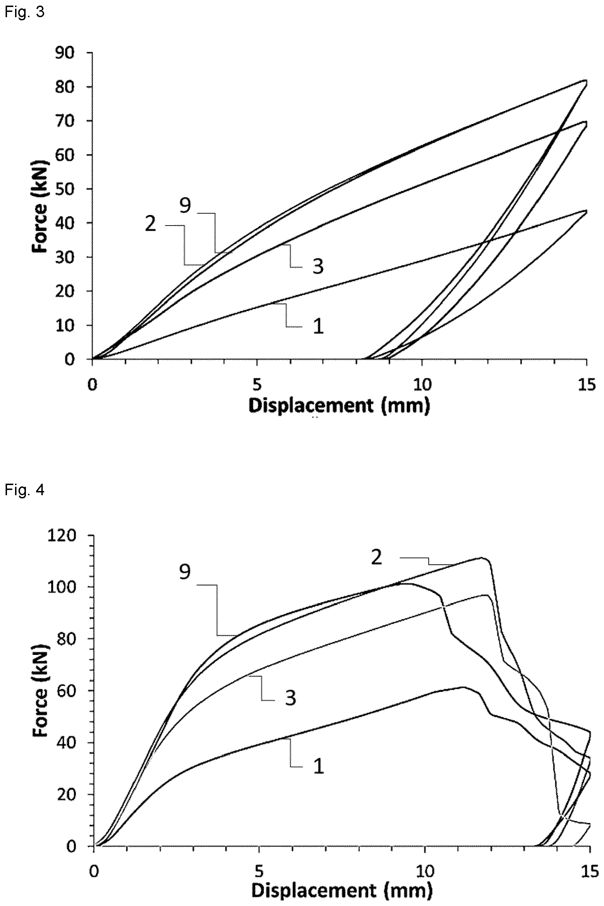

In Figures 3 and 4 the intrusion test result for different examples is presented. The following values are obtained from the tests to rank the intrusion behavior of the two materials.
- For the center position: the force at 15 mm displacement of the punch, in this position no rupture is observed as illustrated by Figure 3, this value is referred to as Fₘₐₓ and is expressed in kN. The energy at Fₘₐₓ expressed in Joule correspond to the surface below the curve.
- For the corner position: the maximum force value, referred to as Fₘₐₓ, expressed in kN, which is reached at the depth of rupture, referred to as "depth at Fₘₐₓ" or at 15 mm if the plate resists the rupture during the full displacement as illustrated by Figure 4. The energy at Fₘₐₓ expressed in Joule correspond to the surface below the curve at Fₘₐₓ and the total energy expressed in Joule correspond to the surface below the curve at maximum displacement.

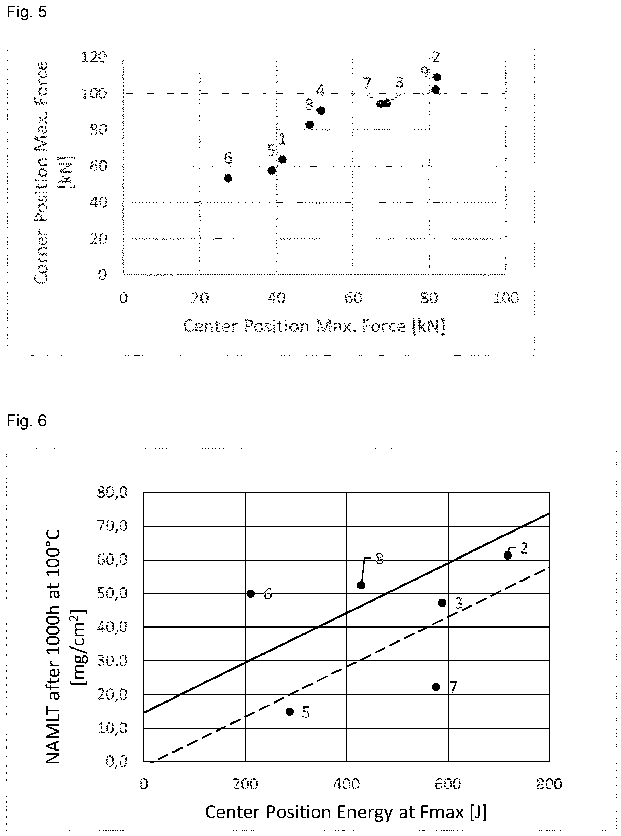

Finally, the results can be presented in a plot having the Center Position Maximum Force on the x-axis and the Corner Position Maximum Force on the y-axis, as illustrated by Figure 5.

According to the invention there is provided a part of battery box for electric or hybrid heavy motor vehicles made from an aluminium alloy plate having a thickness from 6 to 15 mm, wherein said aluminum alloy comprises 4.0 to 5.3 wt.% of Mg, 0.4 to 1.2 wt.% of Mn, 0.5 wt.% or less of Si, 0.5 wt.% or less of Fe, 0.3 wt.% or less of Cu, 0.3 wt.% or less of Cr, 0.5 wt.% or less of Zn, 0.2 wt.% or less of Ti, rest aluminium and unavoidable impurities up to 0.05 wt.% each and 0.15 wt.% total.

Preferably the aluminium alloy plate of the invention has a thickness from 7 to 12 mm. In an embodiment the aluminium alloy plate of the invention has a thickness from 8 to 10 mm.

In particular, the present inventors have found that the plates according to the invention provide an improved combination of intrusion properties, as described by the Center and Corner Position Maximum Force and corrosion properties, as described by the intergranular corrosion resistance of the plate measured by Nitric Acid Mass Loss Test (NAMLT) or the Sea Water Acetic Acid Test (SWAAT).

The plates according to the invention are made of a 5XXX series alloy having a Mg content from 4.0 to 5.3 wt.%. When the Mg content is lower than 4.0 wt.% the intrusion properties are insufficient, whereas when the Mg content is above 5.3 wt.% the corrosion resistance is insufficient. Preferably, the Mg content is from 4.2 to 5.2 wt.%. In an embodiment the Mg content is from 4.3 to 5.0 wt.% and preferentially from 4.6 to 4.9 wt.% and even more preferably from 4.65 to 4.95 wt.%. In an embodiment the Mg content is from 4.25 to 4.75 wt.% and preferentially from 4.30 to 4.65 wt.% and even more preferably from 4.35 to 4.55 wt.%. The balance between in particular intrusion and corrosion properties is dependent on the chosen temper, however when the Mg content is not within the range according to the invention the balance is not satisfactory for any chosen temper.

The Mn content is from 0.4 to 1.2 wt.%. When the Mn content is lower than 0.4 wt.% the intrusion properties are insufficient. Preferably, the Mn content is from 0.45 to 1.0 wt.%. In an embodiment the Mn content is from 0.70 to 0.90 wt.%, in particular to improve again the intrusion properties. In an embodiment the Mn content is from 0.40 to 0.70 wt.%, which may improve the balance between the intrusion and corrosion properties.

The Cr content is up to 0.3 wt%. In an embodiment, the Cr content is from 0.06 to 0.21 wt.%. Preferably, the Cr content is from 0.065 to 0.15 wt.% in particular to improve again the intrusion properties. In an embodiment the Cr content is from 0.070 to 0.095 wt.%. In an embodiment, the Cr content is from 0.09 to 0.11 wt.%.

The Si content is up to 0.5 wt%. The Si content is advantageously from 0.03 to 0.30 wt.% and preferably from 0.05 to 0.25 wt.%. In an embodiment the Si content is at least 0.10 wt.%.

The Fe content is up to 0.5 wt%. The Fe content is advantageously from 0.05 to 0.40 wt.% and preferably from 0.10 to 0.35 wt.%. In an embodiment the Fe content is at least 0.15 wt.%.

The Cu content is up to 0.3 wt%. The Cu content is advantageously less than 0.20 wt.%. In an embodiment which is advantageous for the balance between corrosion properties and intrusion properties the Cu content is from 0.05 to 0.15 wt.%. In another embodiment, the Cu content is at most 0.04 wt.%.

The Zn content is up to 0.5 wt%. The Zn content is advantageously at most 0.45 wt.% and preferably at most 0.35 wt. In an embodiment the Zn content is at most 0.15 wt.% and preferably at most 0.05 wt. In an embodiment, which is advantageous for the balance between corrosion properties and intrusion properties, the Zn content is from 0.15 to 0.35 wt.%, preferably from 0.20 to 0.30 wt.%. In an embodiment the Zn content is from 0.15 to 0.35 wt.% and the Cu content is from 0.05 to 0.15 wt.%.

The Ti content is up to 0.2 wt%. The Ti content is advantageously from 0.005 to 0.05 wt.%, preferably from 0.01 to 0.03 wt.%.

The preferred content for Si, Fe, Cu, Cr, Zn and/or Ti are chosen in particular to improve the balance between in particular intrusion and corrosion properties, as well as formability, stiffness and strength.

The rest is aluminium and unavoidable impurities up to 0.05 wt.% each and 0.15 wt.% total.

After preparation of the alloy, a rolling ingot is obtained typically by vertical semi-continuous direct-chill casting. The ingot is then optionally homogenized.

When homogenization is carried out, the temperature preferably chosen is from 450 °C to 550 °C. for a duration of preferably at least 4 hours. However, the present inventors have found that, surprisingly, excellent results are obtained in the absence of homogenization. In one embodiment, the homogenization step is not carried out, but a simple reheating is carried out before hot rolling at a temperature of from 500 °C to 550 °C.

After homogenization and / or reheating, said ingot is hot-rolled to obtain a plate with a thickness from 6 mm to 15 mm. Preferably the hot rolling entry temperature is from 450 °C to 540 °C.

Advantageously, the hot rolling exit temperature is from 250 °C to 350 °C. No cold rolling is carried out.

The plate is finally treated to be in a strain-hardened and partially annealed temper H2X or a stabilized temper H3X. Preferably, the partial annealing or stabilization to obtain the H2X or H3X temper is carried out at a temperature from 180 °C to 270 °C and preferentially at a temperature from 180 °C to 240 °C. Preferably, the partial annealing or stabilization time is less than 2 hours and preferentially less than one hour. In an embodiment, the H2X or H3X temper is obtained by heating to the desired temperature with no soaking time. In an embodiment the H2X or H3X temper is obtained by coiling the hot rolled plate at an appropriate temperature and cooling in air. Tempers H2X and H3X comprise tempers H22, H24, H26; H28, H32, H34, H36 and H38. H22 and H32 tempers. Preferred tempers are H22, strain-hardened and partially annealed ¼ hard and H32 strain hardened and stabilized ¼ hard. The second digit 2 after the letter H, tempers HX2, designates tempers whose ultimate tensile strength is about midway, preferably at least the midway, between that of the O temper and that of the HX4 temper, HX4 temper designating tempers whose ultimate tensile strength is approximately midway, between that of the O temper and that of the HX8 temper. The increase in tensile strength to the HX8 temper is defined in the standard EN 515 (1993).

A preferred temper H2X or H3X may be further defined by adjusting the mechanical properties with the reference of the corresponding O temper of the plate, at the same thickness. Advantageously, in the LT direction, the ultimate tensile strength Rₘ of the plate is at least 10% and preferably at least 12% higher than the ultimate tensile strength of the plate in O temper and/or the tensile yield strength R_{p0,2} of the plate is at least 65% and preferably at least 70 % higher than the tensile yield strength of the plate in O temper.

Advantageously, in the H2X or H3X temper, the total elongation TE of the plate is from 10% to 25% and preferably from 15% to 22% in the L and LT directions. In an embodiment in the LT direction, the ultimate tensile strength Rₘ of the plate is at from 10% to 18% higher, preferably from 12% to 17% higher, than the ultimate tensile strength of the plate in O temper.

Finally, the plate is cut to size and optionally formed to obtain a part of battery box.

Advantageously the part of battery box according to the invention is a bottom plate 21, or an outer peripheral frame 22 or a top plate 23, preferentially a bottom plate.

The part of battery box of the invention is particularly advantageous because of its intrusion properties and corrosion resistance properties. Preferably the of result of NAMLT test after 1000 h at 100 °C expressed in mg/cm² is at least
0,074 x (Energy at Fmax in Center position expressed in Joule) +14.6
and even more preferably at least
0,074 x (Energy at Fmax in Center position expressed in Joule) - 1.4.

The invention also relates to an electric or hybrid heavy motor vehicle comprising a part of battery box of the invention.

Whereas this invention is here illustrated and described with reference to an embodiment thereof presently contemplated as the best mode of carrying out such invention in actual practice, it is to be understood that various changes may be made in adapting the invention to different embodiments without departing from the broader inventive concepts disclosed herein and comprehended by the claims that follow.

### EXAMPLE

In this example, several plates made of rolling ingots having the composition disclosed in Table 1 were prepared. Alloys A to D are according to the invention. Alloys E is a 6XXX alloy according to the prior art. The rolling ingots were reheated at the temperature of 510°C-545°C for at least one hour, hot rolled to plates having a final thickness from 6.35 to 9.9 mm.

The plates thermomechanical treatment was designed in order to obtain either an H3X temper an O temper or a T651 temper.

**Table 1 Composition of the ingots in wt.%**

| Alloy | Si | Fe | Cu | Mn | Mg | Cr | Zn | Ti |
|---|---|---|---|---|---|---|---|---|
| A | 0.06 | 0.16 | 0.01 | 0.80 | 4.83 | 0.07 | 0.01 | 0.01 |
| B | 0.06 | 0.15 | 0.03 | 0.80 | 4.90 | 0.09 | 0.01 | 0.01 |
| C | 0.08 | 0.20 | 0.03 | 0.81 | 4.67 | 0.08 | 0.04 | 0.02 |
| D | 0.13 | 0.30 | 0.06 | 0.49 | 4.44 | 0.10 | 0.25 | 0.02 |
| E | 0.63 | 0.13 | 0.34 | 0.05 | 1.03 | 0.22 | 0.05 | 0.02 |

The tensile yield strength, R_{p0,2}, ultimate tensile strength, Rₘ, and total elongation TE were determined in the transverse direction using methods known to one of ordinary skill in the art. The tensile tests were performed according to ISO/DIS 6892-1. The results are provided in Table 2.

**Table 2 - Mechanical properties**

| Trial Number | Materials Description | | | Mechanical Properties LT | | |
|---|---|---|---|---|---|---|
| | Alloy | Thickness (mm) | Temper | Rp0.2 [MPa] | Rm [MPa] | TE [%] |
| 1 | A | 7 | H3X | 233 | 360 | 20 |
| 2 | B | 10 | H3X | 244 | 357 | 19 |
| 3 | C | 9.5 | H3X | 243 | 357 | 19 |
| 4 | C | 9.5 | O | | | |
| 5 | D | 6.35 | H32 | 241 | 333 | 19 |
| 6 | D | 6.35 | O | 126 | 290 | 26 |
| 7 | D | 9.5 | H32 | 227 | 329 | 20 |
| 8 | D | 9.5 | O | 129 | 289 | 27 |
| 9 | E | 9.9 | T651 | 279 | 318 | 16 |

The intergranular corrosion resistance of the plates was measured by Nitric Acid Mass Loss Test (NAMLT) according to ASTM G67 standard as delivered or after 1000h at 100°C. The Sea Water Acetic Acid Test (SWAAT) was carried out according to standard ASTM G85.The results are disclosed in Table 3.

**Table 3 - Corrosion properties**

| Trial Number | Corrosion Properties | | |
|---|---|---|---|
| | **NAMLT (mg/cm²)** | | **SWAAT (µm)** |
| | As Delivered | After 1000h100°C | As Delivered |
| 2 | 6.9 | 61.4 | 205 |
| 3 | 15.1 | 47.3 | 122.5 |
| 4 | | | |
| 5 | 3.6 | 14,9 | 210 |
| 6 | 2.8 | 50 | 265 |
| 7 | 3.0 | 22,2 | 200 |
| 8 | 2.9 | 52,5 | 180 |
| 9 | | | 940 |

It is noted that Trial Number 9 according to the prior art exhibited disadvantageous SWAAT properties.

The Center Position Maximum and the Corner Position Maximum Force were characterized with the intrusion test as previously described. In Figures 3 and 4 the intrusion test result for examples 1, 2, 3 and 9 is presented. The results are provided in Table 4. Figure 6 illustrates the balance between intrusion properties, in this figure the Energy at Fₘₐₓ in the center position, and the corrosion properties illustrated by the results of NAMLT test after 1000 hours. Reference examples 6 and 8 are located above the solid line of Figure 6 having the equation 0,074 x (Energy at Fmax in Center position expressed in Joule) +14.6: the balance between intrusion properties and intrusion properties is not favorable. Examples 2 and 3 are located between the solid line and the dashed line having the equation and preferably at least 0,074 x (Energy at Fmax in Center position expressed in Joule) - 1.4: the balance between intrusion properties and corrosion properties is favorable, particularly because it enables to reach very high intrusion properties. Examples 5 and 7 are located below the dashed line providing the particularly favorable balance between intrusion properties and corrosion properties. For these test samples very good corrosion resistance is obtained.

**Table 4 - Results of intrusion tests**

| Trial Number | Center Position | | | Corner Position | | | |
|---|---|---|---|---|---|---|---|
| | Fₘₐₓ (kN) | Depth at Fₘₐₓ (mm) | Energy at Fₘₐₓ (J) | Fₘₐₓ (kN) | Depth at Fₘₐₓ (mm) | Energy at Fₘₐₓ (J) | Total Energy (J) |
| 1 | 41,6 | 15 | 331 | 64 | 11,4 | 475 | 601 |
| 2 | 82 | 15 | 718 | 109 | 10,7 | 773 | 1100 |
| 3 | 69 | 15 | 589 | 95 | 11,5 | 701 | 930 |
| 4 | 51,7 | 15 | 459 | 90,4 | 15 | 860 | 860 |
| 5 | 38,7 | 15 | 287,6 | 57,7 | 12,0 | 402 | 531 |
| 6 | 27,5 | 15 | 211,4 | 53,4 | 15,0 | 438 | 440 |
| 7 | 67,3 | 15 | 577,3 | 94,5 | 12,5 | 752 | 923 |
| 8 | 48,7 | 15 | 428,9 | 82,7 | 15,0 | 781 | 785 |
| 9 | 81,6 | 15 | 703 | 102 | 9,8 | 711 | 1047 |

## Claims

1. A part of battery box for electric or hybrid heavy motor vehicles made from an aluminium alloy plate having a thickness from 6 to 15 mm, wherein said aluminum alloy comprises 4.0 to 5.3 wt.% of Mg, 0.4 to 1.2 wt.% of Mn, 0.5 wt.% or less of Si, 0.5 wt.% or less of Fe, 0.3 wt.% or less of Cu, 0.3 wt.% or less of Cr, 0.5 wt.% or less of Zn, 0.2 wt.% or less of Ti, rest aluminium and unavoidable impurities up to 0.05 wt.% each and 0.15 wt.% total, wherein the plate is in a strain-hardened and partially annealed temper H2X or a stabilized temper H3X.

2. A part of battery box according to claim 1, wherein the Zn content is from 0.15 to 0.35 wt.% and/or wherein the Cu content is from 0.05 to 0.15 wt.%.

3. A part of battery box according to claim 1 or claim 2, wherein the Si content is from 0.03 to 0.30 wt.% and preferably from 0.10 to 0.25 wt.%.

4. A part of battery box according to any one of claims 1 to 3, wherein the Fe content is from 0.05 to 0.40 wt.% and preferably from 0.10 to 0.35 wt.%.

5. A part of battery box according to any one of claims 1 to 4, wherein the Mg content is from 4.2 to 5.2 wt.%.

6. A part of battery box according to any one of claims 1 to 5 wherein, in the LT direction, the ultimate tensile strength Rₘ of the plate is at least 10% and preferably at least 12% higher than the ultimate tensile strength of the plate in O temper and/or the tensile yield strength R_{p0,2} of the plate is at least 65% and preferably at least 70 % higher than the tensile yield strength of the plate in O temper.

7. A part of battery box according to any one of claims 1 to 6, wherein the elongation is from 10% to 25% and preferably from 15% to 20% in the L and LT directions.

8. A part of battery box according to any one of claims 1 to 7 wherein the aluminium alloy has a thickness from 7 to 12 mm.

9. A part of battery box according to any one of claims 1 to 8 wherein the result of NAMLT test after 1000 h at 100 °C expressed in mg/cm2 is at least 0,074 x (Energy at Fmax in Center position expressed in Joule) +14.6 and preferably at least 0,074 x (Energy at Fmax in Center position expressed in Joule) - 1.4.

10. A part of battery box according to any one of claims 1 to 9 which a bottom plate (21), or an outer peripheral frame (22) or a top plate (23).

11. A part of battery box according to any one of claims 1 to 10 wherein the plate is in a H22 temper or in a H32 temper.

12. A part of battery box according to any one of claims 1 to 11 wherein in the LT direction, the ultimate tensile strength Rₘ of the plate is at from 10% to 18% higher, preferably from 12% to 17% higher, than the ultimate tensile strength of the plate in O temper.

13. A method to make a part of battery box according to any one of claims 1 to 12 comprising successively
- preparing an aluminium alloy comprising comprises 4.0 to 5.3 wt.% of Mg, 0.4 to 1.2 wt.% of Mn, 0.5 wt.% or less of Si, 0.5 wt.% or less of Fe, 0.3 wt.% or less of Cu, 0.3 wt.% or less of Cr, 0.5 wt.% or less of Zn, 0.2 wt.% or less of Ti, rest aluminium and unavoidable impurities up to 0.05 wt.% each and 0.15 wt.% total;
- casting said aluminium alloy into a rolling ingot;
- homogenizing and/or reheating said rolling ingot;
- hot rolling and optionally cold rolling said rolling ingot to obtain a plate with a thickness from 6 mm to 15 mm;
- partial annealing or stabilization to reach a H2X or H3X temper;
- cutting to size and optionally forming to obtain a part of battery box.

14. A method according to claim 13 wherein the partial annealing or stabilization to obtain the H2X or H3X temper is carried out at a temperature from 180 °C to 270 °C and preferentially at a temperature from 180 °C to 240 °C.

15. An electric or hybrid heavy motor vehicle comprising a part of battery box according to any one of claims 1 to 12.
